# EUROPEAN PATENT SPECIFICATION

(11) **EP 1 435 256 B1**
(45) Date of publication and mention of the grant of the patent: **25.03.2009**
(21) Application number: 03250622.2
(22) Date of filing: 27.01.2003
(51) Int. Cl.: A63B 49/08, B25G 1/01, B62K 21/26

(54) **Grip tape with gel**
Griffband mit Gel
Bande avec gel

(30) Priority: 03.01.2003 CN 03200231
(43) Date of publication of application: 07.07.2004
(73) Proprietor: Yu, Tsai-Yun, Ta Chia Chen, Taichung Hsien (TW)
(72) Inventor: Yu, Tsai-Yun, Ta Chia Chen, Taichung Hsien (TW)
(74) Representative: Cheyne, John Robert Alexander M.

(56) References cited:
- EP-A- 0 738 525
- US-A- 4 953 861
- US-A- 5 088 734
- "Wilson TL Gel" FOG.IMAGEG.NET, [Online] XP002255216 Retrieved from the Internet: <URL:HTTP://FOG.IMAGEG.NET/GRAPHICS/PRODUC T_IMAGES/P462318REG.JPG> [retrieved on 2003-09-19]
- SGMA.COM: "Wilson Expands Its Best-Selling Line of String and Grips" SGMA.COM, [Online] 21 May 2001 (2001-05-21), XP002255217 Retrieved from the Internet: <URL:HTTP://WWW.SGMA.COM/PRESS/2001/PRESS9 96685271-21348.HTML> [retrieved on 2003-09-19]

## Description

### BACKGROUND OF THE INVENTION

### 1. Field of the Invention:

The present invention relates generally to a grip of a device such as a bicycle, tennis racket, badminton racket, baseball bat, etc., and more particularly to a cover tape wound on the grip of the device, which is shock-absorbing, comfortable and positive to grasp, and inexpensive to manufacture.

### 2. Description of the Related Art:

The conventional grip of a device such as the grip of the handlebar of a bicycle and the grip of a tennis racket or badminton racket is commonly spirally wound round with a cover tape for comfortable and skidproof grasp. Most of the conventional cover tapes have a contact surface made of polyurethane (PU), performing as a shock-absorbing layer. The elasticity and shock-absorbing ability of such a conventional cover tape will dramatically decrease after a long time use.

EP 0 738 525 A2 discloses a strip element for covering handgrips of sports articles, tools and the like. The element comprises a supporting strip provided, at a middle portion thereof, with a recess for housing therein a viscoelastic inner construction,

'Wilson TL Gel' FOG.IMAGEG.NET, [Online] XP002255216 Retrieved from the Internet: <URL:HTTP://FOG.IMAGEG.NET/GRAPHICS/PRODUC T_IMAGES/P462318REG.JPG> [retrieved on 2003-09-19] SGMA.COM: and 'Wilson Expands Its Best-Selling Line of String and Grips' SGMA. COM, [Online] 21 May 2001 (2001-05-21), XP002255217 Retrieved from the Internet: <URL:HTTP://WWW.SGMA.COM/PRESS/2001/PRESS9 96685271-21348,HTML> [retrieved on 2003-09-19] relates to tri-layer structure tennis replacement grips having in one variant an anti-shock layer of gel.

### SUMMARY OF THE INVENTION

The primary objective of the present invention is to provide a cover tape, which has a well elasticity and shock-absorbing ability when the cover tape is wound around an object/grip for grasp.

It is another objective of the present invention to provide a cover tape providing a well adhesive strength to the object/grip to which the cover tape is wound such that the cover tape can be bonded to the object/grip firmly.

It is still another objective of the present invention to provide a cover tape, which is simple in construction and is inexpensive in manufacture.

According to the present invention there is provided a cover tape in accordance with claim 1.

The base layer is made of cloth to be grasped by the user. When the cover tape is wound around an object/grip, the elastic layer is bonded to the object/grip.

### BRIEF DESCRIPTION OF THE DRAWINGS

FIG 1 is a schematic drawing showing the structure of a cover tape constructed according to a first preferred embodiment of the present invention.
FIG. 2 is a sectional view showing the cover tape wound round a grip according to the present invention.
FIG. 3 is a schematic drawing showing the structure of a cover tape constructed according to a second preferred embodiment of the present invention.

### DETAILED DESCRIPTION OF THE INVENTION

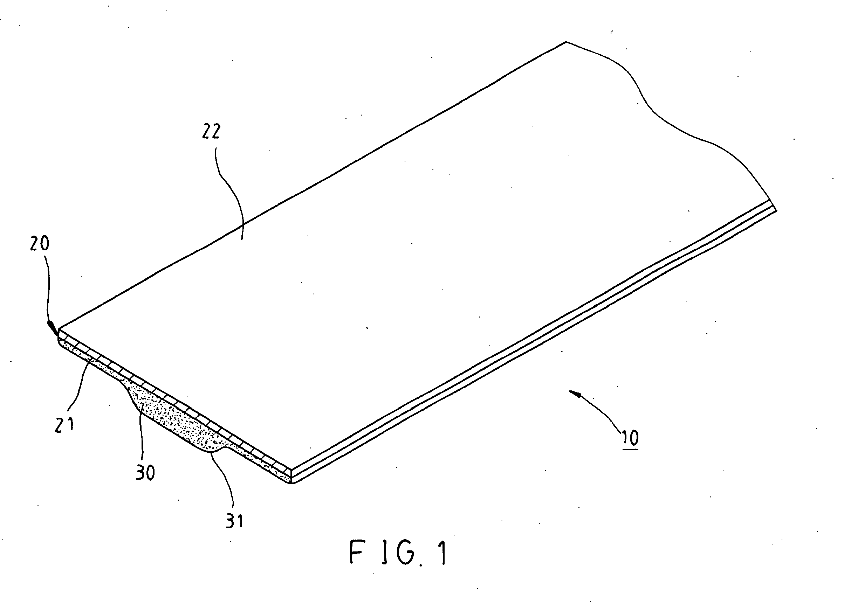

As shown in FIG. 1, a cover tape 10 of the first preferred embodiment of the present invention comprises an elongated, thin, film-like base layer 20 having an inner surface 21 and an outer surface 22, and an elastic layer 30 bonded to the whole area of the inner surface 21 of the base layer 20. The base layer 20 is made of cloth, According to this embodiment, the base layer 20 has a thickness about 1,2 mm. The elastic layer 30 is made of silicone gel such that the elastic layer has the advantages of high elasticity and appropriate tacky. During bonding, the sticky power of the gel enables the elastic layer 30 to be well adhered to the inner surface 21 of the base layer 20 without the use of glue. The elastic layer 30 has a rib 31 longitudinally extended in direction along a longitudinal axis of the base layer at the middle portion thereof. The width of the rib 31 is about one-third of the width of the base layer 20. This arrangement enables the cover tape 10 to have a satisfactory shock absorbing ability.

When making the cover tape 10, a long sheet of film-like object, i.e. the base layer 20, is carried forwards on a conveyer belt, and molten gel is applied to the top surface, namely, the inner surface 21 of the base layer 20 by means of a gel applicator suspended above the conveyer belt at a fixed point. Therefore, the top surface of the base layer 20 is evenly coated with a layer of gel of a certain thickness. Further, a mold is provided in front of the gel applicator adapted to mold the applied gel into a predetermined shape, e.g. the rib 31. When the base layer is passed through the mold, the applied gel is formed to a desired shape. At the same time, the applied gel, due to capillary effect, penetrates inside the base layer 20. After cooled down, the gel is directly bonded to the base layer 20, forming the desired elastic layer 30.

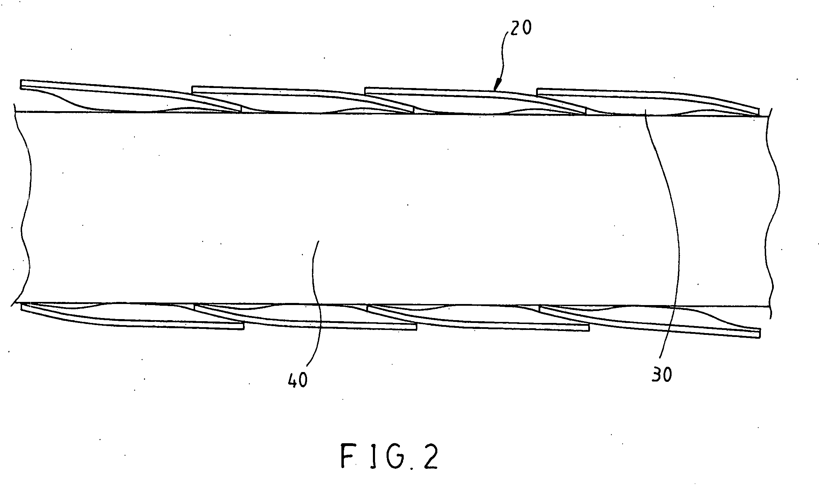

The cover tape 10 can be used to cover the grips of a bicycle, the grip of a tennis racket or badminton racket, or the grip of a golf club. FIG 2 shows an application example of the cover tape 10 wound around a bicycle grip 40. As illustrated in FIG, 2, a bonding material such as glue (not shown) is applied to the periphery of the grip 40 or the inner side of the cover tape 10, i.e. the surface of the elastic layer 30, and then the cover tape 10 is spirally wound around the grip 40 with the elastic layer 30 attached to the periphery of the grip 40 and the outer surface 22 of the base layer 20 exposed to the outside. When winding, each two adjacent turns of the cover tape 10 are peripherally overlapped with each other such that the cover tape 10 provides a uniform thickness on the grip 40 after winding.
The afore said cover tape 10 achieves the following advantages.
1. Because the elastic layer 30 is made of gel, the cover tape 10 is comfortable to grasp and, provides a good shock absorbing function even if a long time use.
2. The elastic layer 30 of the cover tape 10 is made of gel which is tacky. When the cover tape 10 is wound around the periphery of the grip 40 by means of bonding material, the bonding strength between the cover tape 10 and the grip 40 is high so as to prevent the cover tape 10 to untwist from the grip 40.
3. Because the cover tape 10 is made by directly coating the elastic layer 30 to the base layer 20, the fabrication of the cover tape 10 is simple and inexpensive.

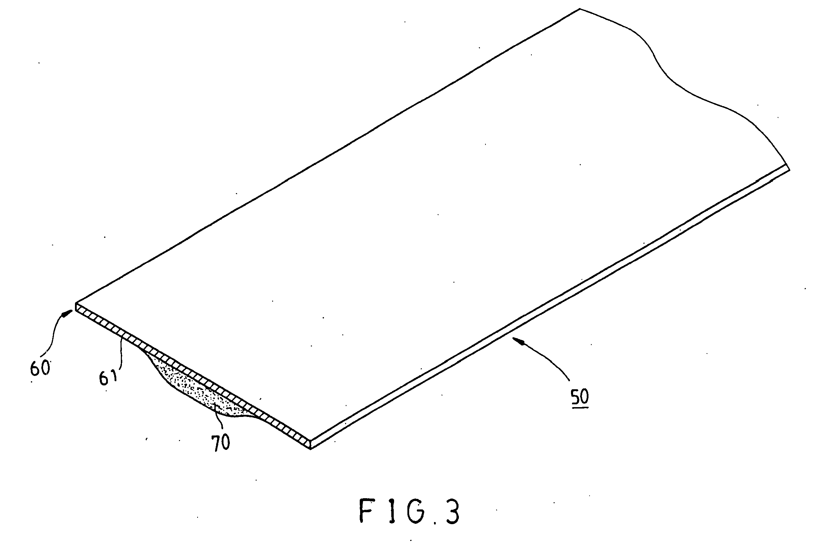

FIG. 3 shows a second preferred embodiment of the present invention. According to this embodiment, a cover tape 50 is comprised of a base layer 60 and an elastic layer 70 bonded to an inner surface 61 of the base layer 60. Unlike the aforesaid first preferred embodiment of the present invention, the elastic layer 70 covers only a middle portion of the base layer 60, i.e., the two edges of the inner surface of the base layer 60 are bare. It is to be understood that the elastic layer can be also designed to have a maximum thickness at a middle portion thereof and gradually decrease the thickness from the middle portion toward two lateral sides thereof.

## Claims

1. A cover tape adapted to wind round a grip, said cover tape (10; 50) comprising:
an elongated base layer (20; 60) made of cloth, having an inner surface (21; 61) and an outer surface (22); and
an elastic layer (30; 70) made of silicone gel bonded by the sticky power of silicone gel to the inner surface (21; 61) of said base layer (20;60) and the gel having a predetermined elasticity;
wherein the cover tape (10; 50) is adapted to be spirally wound around the grip (40) with said elastic layer (30; 70) bonded directly to the grip (40) and the outer surface (22) of said base layer (20; 60) exposed to the outside.

2. The cover tape as defined in claim 1, wherein said elastic layer (30; 70) covers the whole area of said inner surface (21; 61) of said base layer (20; 60).

3. The cover tape as defined in claim 2, wherein said elastic layer (30; 70) has only a single rib (31) extending along the direction of a longitudinal axis of said base layer (20) and disposed at a middle portion thereof.

4. The cover tape as defined in claim 1, wherein said elastic layer (70) covers a middle portion of the inner surface (61) of said base layer (60) and extends in direction along a longitudinal axis of said base layer (60).

5. The cover tape as defined in claim 4, wherein the elastic layer (70) has a maximum thickness at a middle portion thereof and the thickness of the elastic layer is gradually decreased from the middle portion thereof toward two lateral sides thereof.

6. A hand grip comprising a grip component covered by a cover tape (10; 50) in accordance with any one of the preceding claims, the elastic layer being disposed between the base layer and the grip component.

## Patentansprüche

1. Deckband zum Wickeln um einen Griff, wobei das Deckband (10, 50) umfasst:
eine längliche Basisschicht (20, 60) aus Stoff, mit einer inneren Oberfläche (21, 61) und einer äußeren Oberfläche (22); und
eine elastische Schicht (30, 70) aus Silikongel, die durch die Klebfähigkeit des Silikongels mit der inneren Oberfläche (21, 61) der Basisschicht (20, 60) verbunden ist, und wobei das Gel eine vorbestimmte Elastizität hat;
wobei das Deckband (10, 50) dazu ausgelegt ist, dass es spiralförmig so um den Griff (40) gewickelt werden kann, dass die elastische Schicht (30, 70) direkt mit dem Griff (40) verbunden ist und die äußere Oberfläche (22) der Basisschicht (20, 60) nach außen weist.

2. Deckband nach Anspruch 1, wobei die elastische Schicht (30, 70) die gesamte Fläche der inneren Oberfläche (21, 61) der Basisschicht (20, 60) bedeckt.

3. Deckband nach Anspruch 2, wobei die elastische Schicht (30, 70) nur über eine einzelne Rippe (31) verfügt, die sich entlang einer Längsachse der Basisschicht (20) erstreckt und in einem mittleren Teil davon angeordnet ist.

4. Deckband nach Anspruch 1, wobei die elastische Schicht (70) einen mittleren Abschnitt der inneren Oberfläche (61) der Basisschicht (60) bedeckt und sich in der Richtung entlang einer Längsachse der Basisschicht (60) erstreckt.

5. Deckband nach Anspruch 4, wobei die elastische Schicht (70) in einem mittleren Abschnitt der Schicht eine maximale Stärke aufweist, und wobei die Stärke der elastischen Schicht allmählich von ihrem mittleren Teil zu ihren Enden hin abnimmt.

6. Handgriff umfassend ein Griffteil, das mit einem Deckband (10, 50) aus einem der vorherigen Ansprüche bedeckt ist, wobei die elastische Schicht zwischen der Basisschicht und dem Griffteil angeordnet ist.

## Revendications

1. Bande protectrice pour embobiner une poignée, ladite bande protectrice comprenant :
une couche de base élongée (20, 60) en étoffe avec une surface intérieure (21, 61) et une surface extérieure (22) ; et
une couche élastique (30, 70) en gel de silicone connectée par ses propriétés de collage à la surface intérieure (21, 61) de ladite couche de base (20, 60) et ayant une élasticité prédéterminée ;
la bande protectrice (10, 50) étant adaptée à pouvoir embobiner la poignée (40) en spirale, ladite couche élastique (30, 70) étant connectée directement à la poignée (40) et la surface extérieure (22) de ladite couche de base (20, 60) étant exposée vers l'extérieur.

2. Bande protectrice selon la revendication 1, dans laquelle ladite couche élastique (30, 70) couvre la totalité de ladite surface intérieure (21, 61) de ladite couche de base (20, 60).

3. Bande protectrice selon la revendication 2 dans laquelle ladite couche élastique (30, 70) a une seule nervure (31) qui s'étend dans la direction d'un axe longitudinal de ladite couche de base (20) et qui est disposée dans une partie centrale de ladite couche élastique.

4. Bande protectrice selon la revendication 1 dans laquelle ladite couche élastique (70) couvre une partie centrale de la surface intérieure (61) de ladite couche de base (60) et s'étend dans une direction d'un axe longitudinal de ladite couche de base (60).

5. Bande protectrice selon la revendication 4 dans laquelle la couche élastique (70) a une épaisseur maximale dans une partie centrale de la couche élastique et dans laquelle l'épaisseur de la couche élastique se réduit graduellement à partir de sa partie centrale vers ses deux côtés latéraux.

6. Poignée à main comprenant une partie poignée recouverte par une bande protectrice (10, 50) selon l'une des revendications précédentes, la couche élastique étant disposée entre la couche de base et la partie poignée.
